# EUROPEAN PATENT SPECIFICATION

(11) **EP 2 939 921 B1**
(45) Date of publication and mention of the grant of the patent: **15.02.2017**
(21) Application number: 15163137.1
(22) Date of filing: 10.04.2015
(51) Int. Cl.: B64C 9/22

(54) **LEADING EDGE ASSEMBLY FOR AN AIRCRAFT**
VORDERKANTENANORDNUNG FÜR EIN FLUGZEUG
ENSEMBLE DE BORD D'ATTAQUE POUR UN AVION

(30) Priority: 30.04.2014 US 201414266063
(43) Date of publication of application: 04.11.2015
(73) Proprietor: The Boeing Company, Chicago, IL 60606-1596 (US)
(72) Inventor: Smith, Clayton A, Seattle, WA Washington 98124 (US)
(74) Representative: Boult Wade Tennant

(56) References cited:
- DE-A1- 1 907 710
- GB-A- 998 895
- US-A- 2 541 565
- US-A- 4 285 482
- US-B1- 8 424 810

## Description

### Field

The present disclosure relates generally to aircraft and, in particular, to control surfaces for aircraft. Still more particularly, the present disclosure relates to a method and apparatus for a leading edge assembly for a wing of an aircraft.

### Background

The wings of an aircraft are designed to generate lift as the aircraft moves. A standard wing design may require a variety of configurations to maintain efficient lift characteristics at both low and high speeds. Accordingly, control surfaces may be used to change the configuration of an aircraft to augment angle of attack capability. Leading edge devices are commonly used to provide this additional angle of attack capability, and are typically provided as extensions of the front of a wing. These devices alter the airflow over the wing thereby to reduce a stalling speed of the aircraft.

A common type of leading edge device is known as a slat. Slats may be fixed or moveable relative to the main wing structure. A retractable slat, as commonly used in commercial aircraft, may be placed in an extended or deployed position to reduce stalling speed during takeoff and landing. When the aircraft is operating at cruising speed, the slats may be moved to a retracted or stowed position to increase performance. An aircraft may include other types of control surfaces known as trailing devices (such as flaps) to increase lift during takeoff and landing.

Conventional aircraft wing design typically results in an aft-facing step surface located where the leading edge device engages the main wing structure. More specifically, when the leading edge device is in the stowed position, the leading edge device nests over the main wing structure with a rear end of an upper part of the leading edge device located on top of an upper surface of the main wing structure. The step surface is formed at this location and generally consists of the thickness of the rear end of the leading edge device. The presence of the step surface increases drag and therefore decreases the efficiency at which the aircraft may operate. Airflow speed in the area of the step surface is typically quite high, and therefore even relatively small step surfaces can cause a significant increase in drag. Furthermore, modification of the main wing structure profile to accommodate the thickness of the leading edge device rear end creates a forward facing step surface that is exposed and degrades lift when the leading edge device is in the deployed position, and therefore is not a satisfactory solution to decrease drag.

GB 998,895 describes a wing having a leading edge slat arrangement. The slat arrangement is operated by an actuator to move the slat forward and down away from the main wing structure. The actuator is also used to drive, via a linkage, a further element to close the gap between the upper surface of the slat and the upper surface of the main wing structure when the slat is in its deployed position. US 2,541,565 and DE 1,907,710 describe leading edge structures where a slat is deployed from a wing main structure. The wing main structure is provided with a panel that is depressed when the slat is in its stowed position such that the upper surface of the slat and the upper surface of the wing structure form a continuous surface. When the slat is deployed, the panel moves upwardly to smooth the transition of the upper surface of the main wing structure when the slat is in the deployed position. The panel is moved through a spring action, either because of the natural resilience of the panel itself or because it is acted upon by a separate spring.

Therefore, it would be advantageous to have a method and apparatus that takes into account one or more of the issues discussed above.

### Summary

The present invention provides an apparatus for a leading edge assembly for a wing of an aircraft according to claim 1 and to a method of reducing drag on an aircraft according to claims 4.

In accordance with one embodiment, an apparatus includes a main wing structure having an upper surface, a lower surface, and a fixed leading edge. A leading edge device has an outer surface forward of the main wing structure and an inner surface extending between the outer surface and the main wing structure, the leading edge device being movable between a stowed position, in which at least a portion of the inner surface engages the main wing structure, and a deployed position, in which the inner surface is spaced from the main wing structure. The main wing structure upper surface includes a panel defining a panel outer surface and having a rear edge movable to a retracted position when the leading edge device is in the stowed position such that the leading edge device outer surface and an intermediate portion of the main wing structure upper surface define a first continuous outer mold line shape.

In accordance with another embodiment, a flight control surface system for an aircraft includes a main wing structure having an upper surface, a lower surface, and a fixed leading edge. A slat has an outer surface forward of the main wing structure and an inner surface extending between the slat outer surface and the main wing structure, the slat movable between a stowed position, in which at least a portion of the inner surface engages the main wing structure, and a deployed position, in which the inner surface is spaced from the main wing structure. The main wing structure upper surface includes a panel defining a panel outer surface and having a front edge rotatably coupled to a front portion of the main wing structure upper surface and a rear edge movable to a retracted position when the slat is in the stowed position such that the slat outer surface and an intermediate portion of the main wing structure upper surface define a first continuous outer mold line shape.

In accordance with another embodiment, a method of reducing drag on an aircraft includes providing a main wing structure having an upper surface, a lower surface, and a fixed leading edge, providing a slat having a slat outer surface forward of the main wing structure and a slat inner surface extending between the slat outer surface and the main wing structure, the slat movable between a stowed position, in which at least a portion of the inner surface engages the main wing structure, and a deployed position, in which the inner surface is spaced from the main wing structure, and providing a panel in the main wing structure upper surface defining a panel outer surface and having a rear edge movable between a retracted position and an extended position. The method further includes placing the panel in the retracted position when the slat is in the stowed position such that the slat outer surface and an intermediate portion of the main wing structure upper surface define a first continuous outer mold line shape.

In accordance with the invention, in all of the embodiments identified herein, the rear edge of the panel is further movable to an extended position when the leading edge device is in the deployed position such that the panel outer surface and the intermediate portion of the main wing structure upper surface define a second continuous outer mold line shape.

In accordance with a known example not forming part of the claimed invention, but useful for understanding it, the panel is configured to move from the extended position to the retracted position when the inner surface of the leading edge device pushes against the panel outer surface when moving to the stowed position.

In accordance with another known example not forming part of the claimed invention, but useful for understanding it, a bias component is configured to autonomously return the panel to the extended position from the retracted position when the leading edge device is in the deployed position.

In accordance with another known example not forming part of the claimed invention, but useful for understanding it, the bias component comprises a spring.

In accordance with the invention, in all of the embodiments identified herein, the panel includes a front edge rotatably coupled to a front portion of the main wing structure upper surface, the front portion being disposed forward of the intermediate portion.

In accordance with the invention, in all of the embodiments identified herein, a hinge couples the panel front edge to the front portion of the main wing structure upper surface.

In accordance with the invention, in all of the embodiments identified herein, a panel actuator is operably coupled to the panel and configured to actuate the panel to the retracted position.

In accordance with another embodiment that may be combined with any of the other embodiments identified herein, a leading edge device actuator is operably coupled to the leading edge device and configured to actuate the leading edge device between stowed and deployed positions, and to remove a mechanical load from the panel as the actuator moves the leading edge device from the stowed position to the deployed position.

In accordance with another embodiment that may be combined with any of the other embodiments identified herein, the leading edge device is configured to cause a change in airflow that increases angle of attack capability of an aircraft when the leading edge device is in the deployed position as compared to the stowed position.

In accordance with another embodiment that may be combined with any of the other embodiments identified herein, the leading edge device is a slat.

Embodiments of the invention can involve an apparatus that may include a main wing structure having an upper surface, a lower surface, and a fixed leading edge, a leading edge device having a leading edge device outer surface forward of the main wing structure and a leading edge device inner surface extending between the leading edge device outer surface and the main wing structure, the leading edge device movable between a stowed position, in which at least a portion of the inner surface engages the main wing structure, and a deployed position, in which the inner surface is spaced from the main wing structure; and the main wing structure upper surface including a panel defining a panel outer surface and having a rear edge movable to a retracted position when the leading edge device is in the stowed position such that the leading edge device outer surface and an intermediate portion of the main wing structure upper surface define a first continuous outer mold line shape. The rear edge of the panel may further movable to an extended position when the leading edge device is in the deployed position such that the panel outer surface and the intermediate portion of the main wing structure upper surface define a second continuous outer mold line shape. This will enhance operation of the apparatus.

In a known example apparatus not forming part of the claimed invention, but useful for understanding it, the panel may be configured to move from the extended position to the retracted position when the inner surface of the leading edge device pushes against the panel outer surface when moving to the stowed position. The apparatus may also include a bias component configured to autonomously return the panel to the extended position from the retracted position when the leading edge device is in the deployed position. The bias component may include a spring to enhance operation.

In the apparatus according to the claimed invention, the panel includes a front edge rotatably coupled to a front portion of the main wing structure upper surface, the front portion being disposed forward of the intermediate portion. This will improve the performance of the system. In addition, the apparatus also includes a hinge coupling the panel front edge to the front portion of the main wing structure upper surface. The apparatus also includes a panel actuator operably coupled to the panel and configured to actuate the panel to the retracted position. The apparatus may also include a leading edge device actuator operably coupled to the leading edge device and configured to actuate the leading edge device between stowed and deployed positions, and to remove a mechanical load from the panel as the actuator moves the leading edge device from the stowed position to the deployed position. The leading edge device may also be configured to cause a change in airflow that increases angle of attack capability of an aircraft when the leading edge device is in the deployed position as compared to the stowed position. The leading edge device may be a slat or similar control surface.

Embodiments of the invention can involve a flight control surface system for an aircraft that may include a main wing structure having an upper surface, a lower surface, and a fixed leading edge; a slat having a slat outer surface forward of the main wing structure and a slat inner surface extending between the slat outer surface and the main wing structure, the slat movable between a stowed position, in which at least a portion of the inner surface engages the main wing structure, and a deployed position, in which the inner surface is spaced from the main wing structure; and the main wing structure upper surface including a panel defining a panel outer surface and having a front edge rotatably coupled to the to a front portion of the main wing structure upper surface and a rear edge movable to a retracted position when the slat is in the stowed position such that the slat outer surface and an intermediate portion of the main wing structure upper surface define a first continuous outer mold line shape. The panel rear edge may be further movable to an extended position when the slat is in the deployed position such that the panel outer surface and the intermediate portion of the main wing structure upper surface define a second continuous outer mold line shape.

In a known example not forming part of the claimed invention, but useful for understanding it, a flight control surface system may also include a bias component configured to autonomously return the panel to the extended position from the retracted position when the slat is in the deployed position. These elements will improve operational performance of the system.

The flight control surface according to the claimed invention includes a panel actuator operably coupled to the panel and configured to actuate the panel between retracted and extended positions. To enhance operation, the flight control surface system may also include a slat actuator operably coupled to the slat and configured to actuate the slat between stowed and deployed positions, and to remove a mechanical load from the panel as the actuator moves the slat from the stowed position to the deployed position.

Embodiments of the invention can involve a method of reducing drag on an aircraft that may include providing a main wing structure having an upper surface, a lower surface, and a fixed leading edge; providing a slat having a slat outer surface forward of the main wing structure and a slat inner surface extending between the slat outer surface and the main wing structure, the slat movable between a stowed position, in which at least a portion of the inner surface engages the main wing structure, and a deployed position, in which the inner surface is spaced from the main wing structure; providing a panel in the main wing structure upper surface defining a panel outer surface and having a rear edge movable between a retracted position and an extended position; and placing the panel in the retracted position when the slat is in the stowed position such that the slat outer surface and an intermediate portion of the main wing structure upper surface define a first continuous outer mold line shape. The method may also include moving the panel to the extended position when the slat is in the deployed position such that the panel outer surface and the intermediate portion of the main wing structure upper surface define a second continuous outer mold line shape. A panel actuator is operably coupled to the panel and configured to actuate the panel between the retracted and extended positions.

The features, functions, and advantages that have been discussed can be achieved independently in various embodiments or may be combined in yet other embodiments further details of which can be seen with reference to the following description and drawings.

### Brief Description of the Drawings

FIG. 1 is a diagram illustrating an aircraft manufacturing and service method in accordance with an advantageous embodiment;
FIG. 2 is a diagram of an aircraft in which an advantageous embodiment may be implemented;
FIG. 3 is a diagram of a surface control environment in accordance with an advantageous embodiment;
FIG. 4 is a diagram of an aircraft in which an advantageous embodiment may be implemented;
FIG. 5 is a diagram illustrating a portion of a wing with a flight control surface system in accordance with an advantageous embodiment;
FIG. 6 is a diagram illustrating deployment of a leading edge device in accordance with an advantageous embodiment;
FIG. 7 is a diagram illustrating a flight control surface system associated with a wing; and
FIG. 8 is a diagram illustrating a leading edge device in a deployed position.

It should be understood that the drawings are not necessarily drawn to scale and that the disclosed embodiments are sometimes illustrated schematically. It is to be further appreciated that the following detailed description is merely exemplary in nature and is not intended to limit the invention or the application and uses thereof. Hence, although the present disclosure is, for convenience of explanation, depicted and described as certain illustrative embodiments, it will be appreciated that it can be implemented in various other types of embodiments and in various other systems and environments.

### Detailed Description

The following detailed description is of the best currently contemplated modes of carrying out the invention. The description is not to be taken in a limiting sense, but is made merely for the purpose of illustrating the general principles of the invention, since the scope of the invention is best defined by the appended claims.

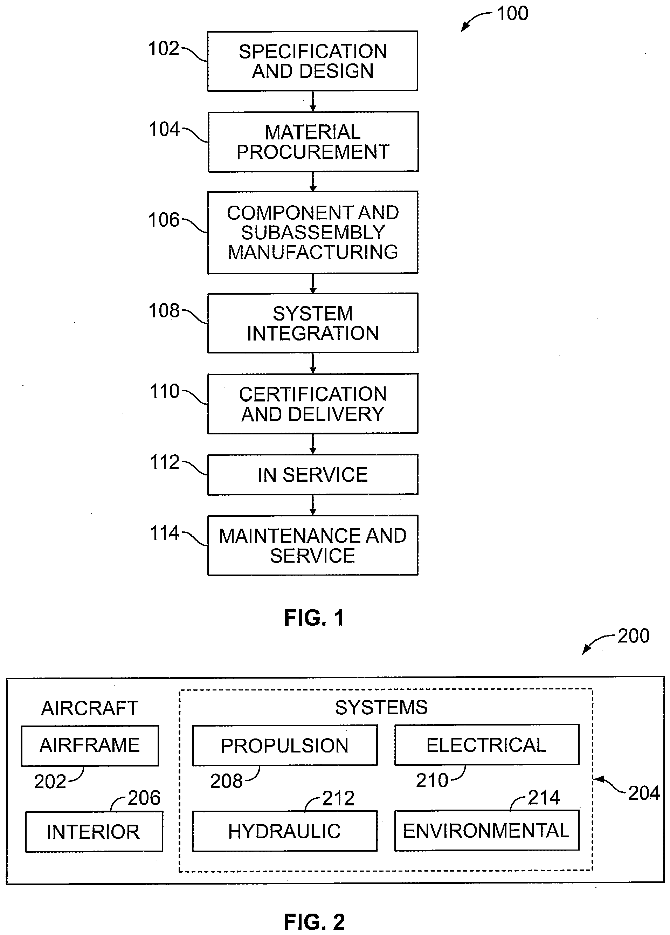

Referring more particularly to the drawings, embodiments of the disclosure may be described in the context of aircraft manufacturing and service method 100 as shown in FIG. 1 and an aircraft 200 as shown in FIG. 2. Turning first to FIG. 1, a diagram illustrating an aircraft manufacturing and service method is depicted in accordance with an advantageous embodiment. During pre-production, the aircraft manufacturing and service method 100 may include specification and design 102 of aircraft 200 in FIG. 2 and material procurement 104.

During production, component and subassembly manufacturing 106 and system integration 108 of the aircraft 200 in FIG. 2 takes place. Thereafter, the aircraft 200 in FIG. 2 may go through certification and delivery 110 in order to be placed in service 112. While in service by a customer, the aircraft 200 in FIG. 2 is scheduled for routine maintenance and service 114, which may include modification, reconfiguration, refurbishment, and other maintenance or service.

Each of the processes of aircraft manufacturing and service method 100 may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of venders, subcontractors, and suppliers; and an operator may be an airline, leasing company, military entity, service organization, and so on.

With reference now to FIG. 2, a diagram of an aircraft is depicted in which an advantageous embodiment may be implemented. In this example, the aircraft 200 is produced by the aircraft manufacturing and service method 100 in FIG. 1 and may include an airframe 202 with a plurality of systems 204 and an interior 206. Examples of systems 204 include one or more of a propulsion system 208, an electrical system 210, a hydraulic system 212, and an environmental system 214. Any number of other systems may be included. Although an aerospace example is shown, different advantageous embodiments may be applied to other industries, such as the automotive industry.

Apparatus and methods embodied herein may be employed during at least one of the stages of the aircraft manufacturing and service method 100 in FIG. 1. As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C or item B and item C.

In one illustrative example, components or subassemblies produced in component and subassembly manufacturing 106 in FIG. 1 may be fabricated or manufactured in a manner similar to components or subassemblies produced while the aircraft 200 is in service 112 in FIG. 1. As yet another example, a number of apparatus embodiments, method embodiments, or a combination thereof may be utilized during production stages, such as component and subassembly manufacturing 106 and system integration 108 in FIG. 1.

A number, when referring to items, means one or more items. For example, a number of apparatus embodiments is one or more apparatus embodiments. A number of apparatus embodiments, method embodiments, or a combination thereof may be utilized while the aircraft 200 is in, for example, without limitation, component and subassembly manufacturing 106, system integration 108, and/or during maintenance and service 114 in FIG. 1.

For example, one or more of the different advantageous embodiments may be used to replace current wing structures used on the aircraft 200 with those in accordance with one or more advantageous embodiments. The use of a number of the different advantageous embodiments may substantially expedite the assembly of or reduce the cost of the aircraft 200. Further, the different advantageous embodiments also may reduce the amount of drag acting on the aircraft 200 while in service 112.

The different advantageous embodiments recognize and take into account that the upper trailing end of leading edge devices, such as slats, may create a step surface with the upper surface of main wing structures when leading edge devices are in stowed positions. The presence of a step surface may increase the amount of drag acting on the aircraft when the leading edge devices are in stowed positions during cruising speeds of the aircraft. The different advantageous embodiments recognize and take into account that this drag may be reduced by changing the design of the main wing structure upper surface to reduce or eliminate the step surface.

Thus, one or more of the advantageous embodiments provide a method and apparatus for a flight control surface system. The apparatus comprises a panel formed in an upper surface of the main wing structure that is movable between extended and retracted positions. The panel has a retracted position when the leading edge device is in the stowed position and an extended position when the leading edge device is in the deployed position. The movable panel may reduce or eliminate the step surface normally present on conventional aircraft thereby to reduce associated drag.

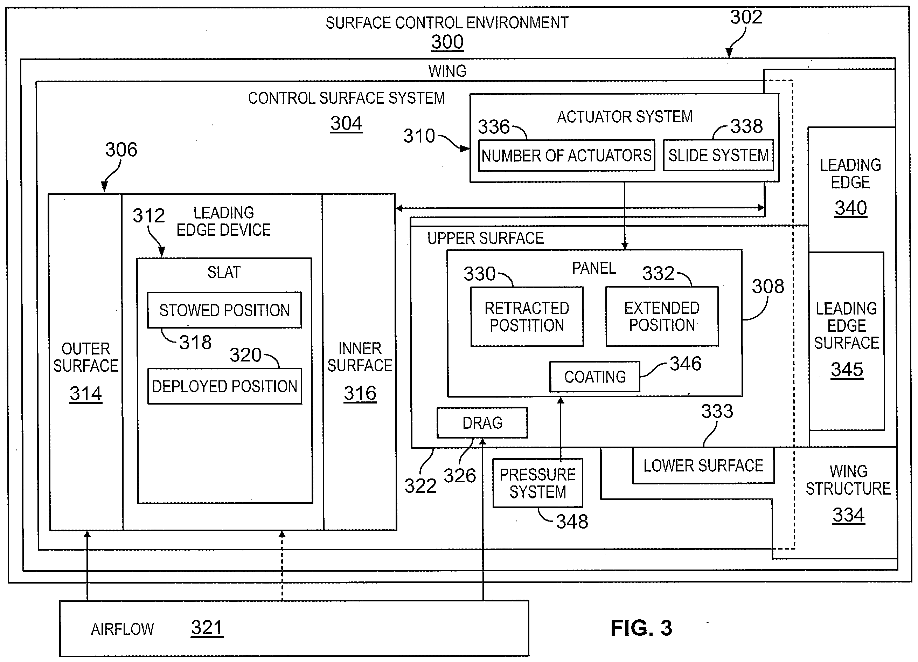

With reference now to FIG. 3, a diagram of a surface control environment is depicted in accordance with an advantageous embodiment. A surface control environment 300 in FIG. 3 may be implemented in an aircraft, such as the aircraft 200 in FIG. 2. In this illustrative example, a wing 302 has a flight control surface system 304. The flight control surface system 304 comprises a leading edge device 306, a movable panel 308, an actuator system 310, and/or other suitable components. In this illustrative example, the leading edge device 306 takes the form of a slat 312.

The leading edge device 306 may have an outer surface 314 and an inner surface 316. In these examples, the leading edge device 306 may have a stowed position 318 and a deployed position 320. In the stowed position 318, the outer surface 314 may be exposed to an airflow 321, and the inner surface 316 may be unexposed to the airflow 321. When the leading edge device 306 is moved into the deployed position 320, the inner surface 316 may be exposed to the airflow 321.

In these illustrative examples, a main wing structure 334 contacts the leading edge device 306 in the stowed position 318. The main wing structure may include a leading edge 340 defining a leading edge surface 345. Upper and lower surfaces 322, 333 extend to the aft of the leading edge surface 345. The panel 308 may form a portion of the upper surface 322 and may be movable between a retracted position 330 and an extended position 332. The panel 308 moves to the retracted position 330 when the leading edge device 306 is in the stowed position 318 such that the leading edge device outer surface 314 and main wing structure upper surface 322 define a first continuous outer mold line shape. The panel 308 moves to the extended position 332 when the leading edge device 306 is in the deployed position 320 such that the panel 308 and main wing structure upper surface 322 define a second continuous outer mold line shape. By providing a continuous outer mold line shape when the leading edge device 306 is in the deployed position, the step surface is eliminated, thereby reducing drag 326 due to airflow 321 over the main wing structure upper surface 322.

Various methods and structure may be employed to actuate the panel 308 between retracted and extended positions 330, 332. For example, an actuator system 310 may include a number of actuators 336. The number of actuators 336 may be, for example, a number of linear actuators, and may include a panel actuator operably coupled to the panel 308 and configured to actuate the panel between retracted and extended positions.

In a known alternative example not forming part of the claimed invention, but useful for understanding it, a pressure system 348 may be used to operate the panel 308. The pressure system 348 may be configured to move the panel 308 between the retracted position 330 and the extended position 332. For example, the pressure system 348 may take the form of a bias component such as a spring system, an air pressure system, and/or some other suitable type of pressure system for applying a biasing force to the panel 308. The pressure system 348 may be resilient such that movement of the panel 308 from the extended position 332 to the retracted position 330 is permitted, such as when the leading edge device 306 engages the panel 308 as it moves to the stowed position. The pressure system 348 may apply a mechanical load on the panel 308 in the retracted position 330 that is removed as the leading edge device 306 moves from the stowed 318 position to the deployed position 320.

The actuator system 310 may also operate the leading edge device 306 between stowed and deployed positions 318, 320. For example, the number of actuators 336 may include a leading edge device actuator operably coupled to the leading edge device 306, and the actuator system 310 may include a slide system 338. The slide system 338 is configured to guide the leading edge device 306 during movement between the stowed position 318 and the deployed position 320. For example, without limitation, the slide system 338 may comprise a number of rails that move along rollers. In this manner, these and/or other suitable components within the actuator system 310 are configured to move the leading edge device 306 between the deployed position 320 and the stowed position 318.

In these illustrative examples, the panel 308 may be comprised of materials selected from at least one of a shape memory alloy, a nickel-titanium alloy, nitinol, aluminum, titanium, steel, a plastic, a synthetic composite, a polyurethane, a metal, a metal alloy, and/or other suitable materials.

Also, in some advantageous embodiments, the panel 308 also may include a coating 346. The coating 346 may be a coating used to reduce friction that may occur when the panel 308 is pushed against the leading edge surface 345 of the structure 334. In these illustrative examples, the coating 346 may be, for example, a layer of Teflon® and/or any other suitable material that may reduce rubbing or friction.

In the different advantageous embodiments, the flight control surface system 304 may be installed during the manufacturing and assembly of new aircraft. Further, the flight control surface system 304 may be installed during maintenance or refurbishment of aircraft. For example, the panel 308 may be used to replace portions of currently existing main wing structure upper surfaces 322. This replacement may occur without a need to change other structures in the flight control surface system 304. For example, the current actuator system, track system, and/or other components may be used with few or no modifications.

The illustration of the surface control environment 300 in FIG. 3 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

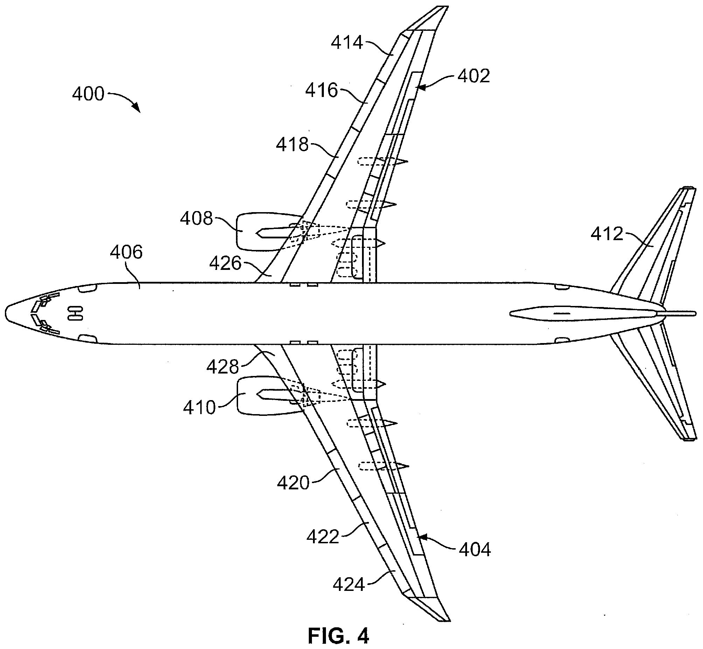

With reference now to FIG. 4, a diagram of an aircraft is depicted in which an advantageous embodiment may be implemented. The aircraft 400 is an example of an aircraft in which a surface control system may be implemented. In this illustrative example, the aircraft 400 has wings 402 and 404 attached to a body 406. The aircraft 400 includes a wing mounted engine 408, a wing mounted engine 410, and a tail 412.

In these illustrative examples, the surface control environment 300 in FIG. 3 may be implemented to provide surface control systems for the wings 402, 404. For example, slat systems 414, 416, 418, 420, 422, and 424 may be implemented on leading edges 426 and 428 of the wings 402, 404. These flight control systems may be implemented using flight control surface system 304 in FIG. 3. In some advantageous embodiments, all of the systems may be referred to collectively as a single flight control surface system.

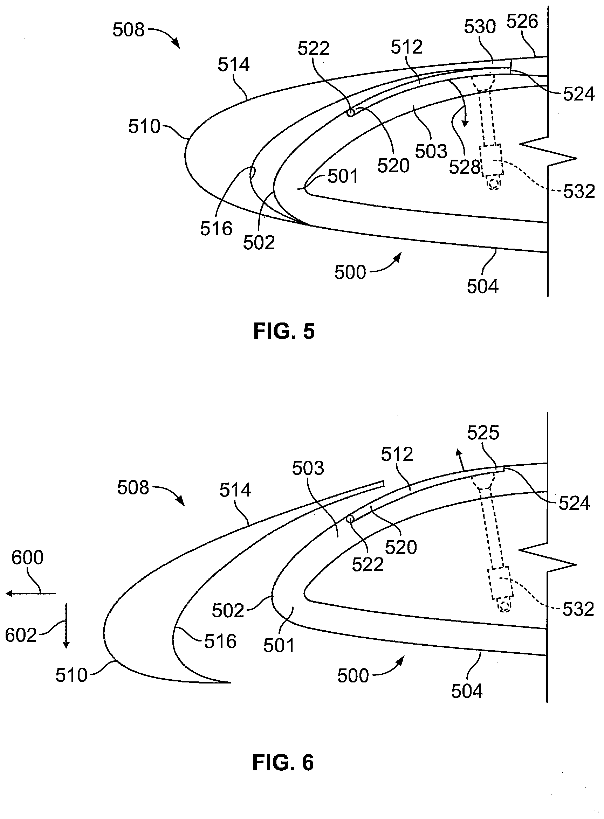

Turning to FIGS. 5-8, diagrams illustrating a surface control system on the leading edge of a wing are depicted. These figures are presented to provide an illustration of a number of conceptual features for an implementation of the surface control environment 300. In these illustrative examples, other mechanisms, such as tracks, an actuation system, rollers, and/or other components are not shown to more clearly illustrate some of the different features in flight control surface system 304 in FIG. 3.

With reference now to FIG. 5, a diagram illustrating a portion of a wing with a flight control surface system is depicted in accordance with an advantageous embodiment. In this example, a cross-sectional view of a portion of wing structure 500 is illustrated. The wing structure 500 is an example of a wing, such as wing 402 or wing 404 in FIG. 4.

In this illustrative example, the main wing structure 500 has a fixed leading edge 501 defining a leading edge surface 502, an upper surface 503, and a lower surface 504. A flight control surface system 508 is shown in this partial view as including a main wing structure 500, a leading edge device 510, and a panel 512. The flight control surface system 508 is an example of one implementation for the flight control surface system 304 in FIG. 3. For example, the leading edge device 510 and the panel 512 are examples of implementations for the leading edge device 306 and the panel 308 in FIG. 3. The leading edge device 510 has an outer surface 514 and an inner surface 516. In this depicted example, the leading edge device 510 is shown in a stowed position. In this illustration, the panel 512 is shown in a retracted position.

As can be seen in this illustrative example, the panel 512 includes a front edge 520 pivotably coupled to the main wing structure 500 by a hinge 522, and a rear edge 524 positioned adjacent an intermediate portion 526 of the main wing structure upper surface 503. The panel 512 is rotated clockwise (as shown by arrow 528 in FIG. 5) to the retracted position to accommodate a thickness of a rear end 530 of the leading edge device 510 as it is in the stowed position. Accordingly, the leading edge device outer surface 514 and the intermediate portion 526 of the main wing structure upper surface 503 define a first continuous outer mold line shape having reduced drag. A panel actuator 532 is operatively coupled to the panel 512 to actuate the panel to the retracted position as shown.

Turning now to FIG. 6, a diagram illustrating deployment of a leading edge device is depicted in accordance with an advantageous embodiment. In this illustrative example, the leading edge device 510 is shown moving in the direction of arrow 600 and arrow 602. In other words, the leading edge device 510 is being extended and lowered with respect to the leading edge 506 of the main wing structure 500. As can be seen in this illustrative example, the panel 512 moves from the retracted position to the extended position as the leading edge device 510 moves away from the fixed leading edge 501. For example, the panel 512 rotates counterclockwise (as shown by arrow 604 in FIG. 6) to the extended position. Accordingly, the panel outer surface 525 and the intermediate portion 526 of the main wing structure upper surface 503 define a second continuous outer mold line shape having reduced drag. A panel actuator 532 actuates the panel 512 to the extended position as leading edge device moves to the deployed position.

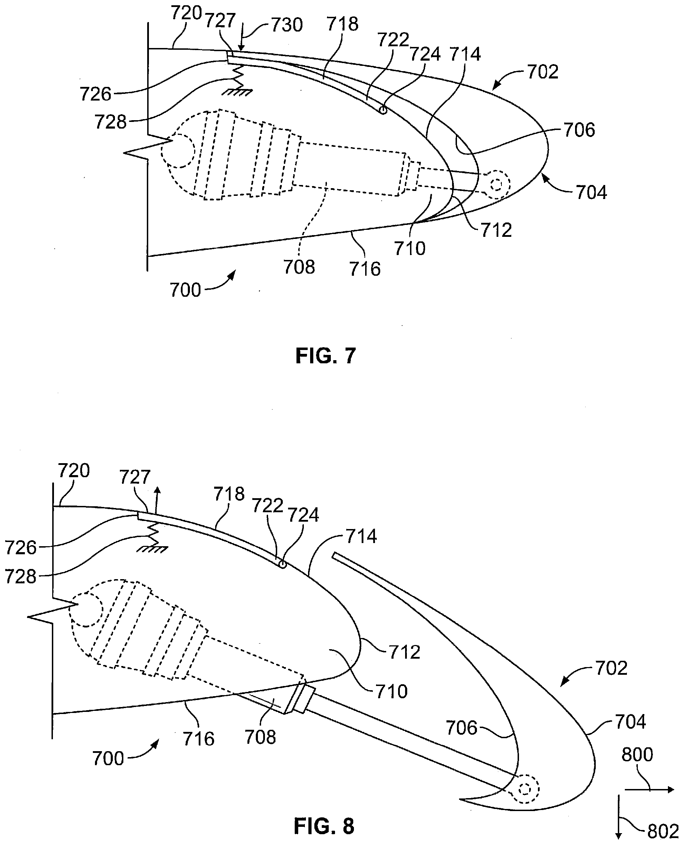

Turning now to FIG. 7, a diagram illustrating a flight control surface system associated with a wing is depicted, although the arrangement shown falls outside of the scope of the claims. In this illustrative example, a portion of the wing 700 is depicted in accordance with a known example not forming part of the claimed invention, but useful for understanding it. The wing 700 is a cross-sectional view of a wing such as, for example, wing 402 or wing 404 in FIG. 4. In this example, a leading edge device 702 is shown having an outer surface 704 and an inner surface 706. A leading edge device actuator 708 is provided for moving the leading edge device 702 between stowed and deployed positions.

In this example, the main wing 700 has a fixed leading edge 710 defining a leading edge surface 712, an upper surface 714, and a lower surface 716. The panel 718 is disposed between the leading edge surface 712 and an intermediate portion 720 of main wing upper surface 714. The panel 718 includes a front edge 722 pivotably coupled to the main wing 700, such as by a hinge 724, and a rear edge 726 disposed adjacent the intermediate portion 720 of the main wing upper surface 714.

In this example, a biasing component is coupled to panel 718 to apply a force biasing the panel 718 to the extended position. Biasing component may include a spring system 728. The force of biasing component may be overcome as the leading edge device 704 moves to the stowed position as shown in FIG. 7. For example, the leading edge device actuator 708 may generate a force 730 to overcome the force of the biasing component so that the leading edge device 704 moves the panel 718 to the retracted position. The leading edge device outer surface 704 and intermediate portion 720 of the main wing structure upper surface 714 define a first continuous outer mold line shape to reduce drag.

Turning now to FIG. 8, a diagram illustrating the leading edge device 704 in a deployed position is depicted, although the arrangement shown falls outside the scope of the claims. As can be seen, the leading edge device 704 has been moved in the direction of arrow 800 and arrow 802 by the actuator system 708.

In this view, the panel 718 has moved from the retracted position to the extended position. This movement of the panel 718 occurs in this example because the mechanical force against the panel 718 provided by the leading edge device 702 is no longer present. As a result, the spring system 728 autonomously returns the panel 718 to the extended position from the retracted position when the leading edge device is in the deployed position. With the panel 718 in the extended position, the panel outer surface 727 and the intermediate portion 720 of the main wing structure upper surface 714 define a second continuous outer mold line shape that reduces drag.

The above-described embodiments and examples depict a panel movable between extended and retracted positions according to the position of a leading edge device. In the retracted position when the leading edge device is stowed, the panel accommodates a thickness of the rear end of the leading edge device to avoid creating of a rearward-facing step surface that would increase drag during cruising. In the extended position when the leading edge device is deployed, the panel occupies the space in which was previously disposed the rear end of the leading edge device, thereby to avoid creating a forward-facing step surface that would negatively impact lift during take-off or landing. The panel has one or more dedicated actuators to move the panel between positions. In known examples not forming part of the claimed invention, but useful for understanding it, the panel may employ a biasing component or other passive system that permits movement under the force of existing actuators for other aircraft systems.

The description of the different advantageous embodiments has been presented for purposes of illustration and description, and it is not intended to be exhaustive or limited to the embodiments in the form disclosed. Many modifications and variations will be apparent to those of ordinary skill in the art. Further, different advantageous embodiments may provide different advantages as compared to other advantageous embodiments.

Although the different advantageous embodiments have been described with respect to aircraft, the different advantageous embodiments may be applied to other types of platforms. For example, without limitation, other advantageous embodiments may be applied to a submarine, a personnel carrier, a spacecraft, a surface ship, and/or some other suitable object.

The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus for a leading edge assembly for a wing of an aircraft comprising:
a main wing structure (500) having an upper surface (503), a lower surface (504), and a fixed leading edge (501);
a leading edge device (510) having a leading edge device outer surface (514) forward of the main wing structure and a leading edge device inner surface (516) extending between the leading edge device outer surface and the main wing structure, the leading edge device movable between a stowed position, in which at least a portion of the inner surface engages the main wing structure, and a deployed position, in which the inner surface is spaced from the main wing structure; and
the main wing structure upper surface including a panel (512) comprising a panel outer surface and having a rear edge (524), the panel being movable from a retracted position to an extended position, wherein
in the retracted position, the leading edge device is in the stowed position such that the leading edge device outer surface and an intermediate portion (526) of the main wing structure upper surface define a first continuous outer shape, and
in the extended position, the leading edge device is in the deployed position such that the panel outer surface and the intermediate portion of the main wing structure upper surface define a second continuous outer shape; and
wherein:
the panel includes a front edge (520) rotatably coupled to a front portion of the main wing structure upper surface by a hinge (522), the front portion being disposed forward of the intermediate portion;
**characterised by** the apparatus further comprising a panel actuator (532) operably coupled to the panel and configured to actuate the panel to the retracted position and to the extended position as the leading edge device moves to the deployed position.

2. The apparatus of claim 1, further comprising a leading edge device actuator operably coupled to the leading edge device and configured to actuate the leading edge device between stowed and deployed positions, and to remove a mechanical load from the panel as the actuator moves the leading edge device from the stowed position to the deployed position.

3. The apparatus of claim 1, in which the leading edge device is a slat.

4. A method of reducing drag on an aircraft, comprising:
providing a main wing structure (500) having an upper surface (503), a lower surface (504), and a fixed leading edge (501);
providing a slat (510) having a slat outer surface (514) forward of the main wing structure and a slat inner surface (516) extending between the slat outer surface and the main wing structure, the slat movable between a stowed position, in which at least a portion of the inner surface engages the main wing structure, and a deployed position, in which the inner surface is spaced from the main wing structure;
providing a panel (512) in the main wing structure upper surface comprising a panel outer surface and having a rear edge (524), the panel being movable between a retracted position and an extended position; and
placing the panel in the retracted position when the slat is in the stowed position such that the slat outer surface and an intermediate portion (526) of the main wing structure upper surface define a first continuous outer shape, and moving the panel to the extended position when the slat is in the deployed position such that the panel outer surface and the intermediate portion of the main wing structure upper surface define a second continuous outer shape,
wherein the panel includes a front edge (520) rotatably coupled to a front portion of the main wing structure upper surface by a hinge (522), the front portion being disposed forward of the intermediate portion,
**characterised by** using a panel actuator (532) coupled to the panel and configured to actuate the panel between the retracted and extended positions.

## Patentansprüche

1. Vorrichtung für eine Tragflächenvorderkantenbaugruppe eines Luftfahrzeugs, die aufweist:
eine Tragflächenhauptstruktur (500), die eine obere Oberfläche (503), eine untere Oberfläche (504) und eine feststehende Vorderkante (501) aufweist;
eine Vorderkanteneinrichtung (510), die eine äußere Vorderkanteneinrichtungsoberfläche (514) vorderhalb der Tragflächenhauptstruktur und eine innere Vorderkanteneinrichtungsoberfläche (516) aufweist, die sich zwischen der äußeren Vorderkanteneinrichtungsoberfläche und der Tragflächenhauptstruktur erstreckt, wobei die Vorderkanteneinrichtung zwischen einer Verstauposition, bei der zumindest ein Teil der inneren Oberfläche an der Tragflächenhauptstruktur anliegt, und einer Einsatzposition verstellbar ist, bei der die innere Oberfläche zur Tragflächenhauptstruktur beabstandet ist; und
die obere Oberfläche der Tragflächenhauptstruktur ein Paneel (512) mit einer äußeren Paneeloberfläche und einer Hinterkante (524) aufweist, wobei das Paneel von einer eingefahrenen Position in eine ausgefahrene Position verstellt werden kann, wobei die Vorderkanteneinrichtung sich in der eingefahrenen Position in der Verstauposition befindet, sodass die äußere Vorderkanteneinrichtungsoberfläche und ein mittlerer Abschnitt (526) der oberen Tragflächenhauptstrukturoberfläche einen ersten kontinuierlichen äußeren Formverlauf ausbilden, und
die Vorderkanteneinrichtung sich in der ausgefahrenen Position in der Einsatzposition befindet, sodass die äußere Paneeloberfläche und der mittlere Abschnitt der oberen Tragflächenhauptstrukturoberfläche einen zweiten kontinuierlichen äußeren Formverlauf ausbilden; und
wobei:
das Paneel eine Vorderkante (520) aufweist, die über ein Gelenk (522) drehbar mit einem vorderen Abschnitt der oberen Tragflächenhauptstrukturoberfläche verbunden ist, wobei der vordere Abschnitt vorderhalb des mittleren Abschnitts angeordnet ist;
**dadurch gekennzeichnet, dass** die Vorrichtung ferner einen Paneelaktor (532) aufweist, der mit dem Paneel funktionell verbunden und zum Verfahren des Paneels in die eingefahrene Position sowie, beim Stellen der Vorderkanteneinrichtung in die Einsatzposition, in die ausgefahrene Position ausgebildet ist.

2. Vorrichtung nach Anspruch 1, die ferner einen Vorderkanteneinrichtungsaktor aufweist, der mit der Vorderkanteneinrichtung funktionell verbunden und dazu ausgebildet ist, die Vorderkanteneinrichtung zwischen der Verstauposition und der Einsatzposition zu verfahren und das Paneel mechanisch zu entlasten, wenn der Aktor die Vorderkanteneinrichtung von der Verstauposition in die Einsatzposition verfährt.

3. Vorrichtung nach Anspruch 1, wobei es sich bei der Vorderkanteneinrichtung um einen Vorflügel handelt.

4. Verfahren zum Verringern des Luftwiderstands eines Luftfahrzeugs, wobei das Verfahren umfasst:
Bereitstellen einer Tragflächenhauptstruktur (500), die eine obere Oberfläche (503), eine untere Oberfläche (504) und eine feststehende Vorderkante (501) aufweist,
Bereitstellen eines Vorflügels (510), der eine äußere Vorflügeloberfläche (514) vorderhalb der Tragflächenhauptstruktur und eine innere Vorflügeloberfläche (516) aufweist, die sich zwischen der äußeren Vorflügeloberfläche und der Tragflächenhauptstruktur erstreckt, wobei der Vorflügel zwischen einer Verstauposition, bei der zumindest ein Teil der inneren Oberfläche an der Tragflächenhauptstruktur anliegt, und einer Einsatzposition verstellbar ist, bei der die innere Oberfläche zur Tragflächenhauptstruktur beabstandet ist;
Bereitstellen eines Paneels (512) in der oberen Tragflächenhauptstrukturoberfläche, das eine äußere Paneeloberfläche und eine Hinterkante (524) aufweist, wobei das Paneel zwischen einer eingefahrenen Position und eine ausgefahrenen Position verstellbar ist; und
Bringen des Paneels in die eingefahrene Position, wenn sich der Vorflügel in der Verstauposition befindet, sodass die äußere Vorflügeloberfläche und ein mittlerer Abschnitt (526) der oberen Tragflächenhauptstrukturoberfläche einen ersten kontinuierlichen äußeren Formverlauf ausbilden, und Bringen des Paneels in die ausgefahrene Position, wenn sich der Vorflügel in der Einsatzposition befindet, sodass die äußere Paneeloberfläche und der mittlere Abschnitt der oberen Tragflächenhauptstrukturoberfläche einen zweiten kontinuierlichen äußeren Formverlauf ausbilden,
wobei das Paneel eine Vorderkante (520) aufweist, die über ein Gelenk (522) drehbar mit einem vorderen Abschnitt der oberen Tragflächenhauptstrukturoberfläche verbunden ist, wobei der vordere Abschnitt vorderhalb des mittleren Abschnitts angeordnet ist,
**gekennzeichnet durch** ein Verwenden eines Paneelaktors (532), der mit dem Paneel verbunden und zum Verfahren des Paneels zwischen der eingefahrenen Position und der ausgefahrenen Position ausgebildet ist.

## Revendications

1. Appareil pour un ensemble de bord d'attaque pour une aile d'un aéronef, comprenant :
une structure d'aile principale (500) ayant une surface supérieure (503), une surface inférieure (504), et un bord d'attaque fixe (501) ;
un dispositif de bord d'attaque (510) ayant une surface extérieure de dispositif de bord d'attaque (514) en avant de la structure d'aile principale et une surface intérieure de dispositif de bord d'attaque (516) s'étendant entre la surface extérieure de dispositif de bord d'attaque et la structure d'aile principale, le dispositif de bord d'attaque étant mobile entre une position rangée, dans laquelle au moins une partie de la surface intérieure vient en prise avec la structure d'aile principale, et une position déployée, dans laquelle la surface intérieure est espacée de la structure d'aile principale ; et
la surface supérieure de structure d'aile principale comprend un panneau (512) comprenant une surface extérieure de panneau et ayant un bord arrière (524), le panneau étant mobile depuis une position rétractée vers une position étendue, dans lequel
dans la position rétractée, le dispositif de bord d'attaque est dans la position rangée de telle sorte que la surface extérieure de dispositif de bord d'attaque et une partie intermédiaire (526) de la surface supérieure de structure d'aile principale définissent une première forme extérieure continue, et
dans la position étendue, le dispositif de bord d'attaque est dans la position déployée de telle sorte que la surface extérieure de panneau et la partie intermédiaire de la surface supérieure de structure d'aile principale définissent une seconde forme extérieure continue ; et
dans lequel :
le panneau comprend un bord avant (520) couplé de manière rotative à une partie avant de la surface supérieure de structure d'aile principale par une articulation (522), la partie avant étant disposée en avant de la partie intermédiaire ;
**caractérisé en ce que** l'appareil comprend en outre
un actionneur de panneaux (532) couplé de manière opérationnelle au panneau, et configuré pour actionner le panneau vers la position rétractée et vers la position étendue lorsque le dispositif de bord d'attaque se déplace vers la position déployée.

2. Appareil selon la revendication 1, comprenant en outre un actionneur de dispositif de bord d'attaque couplé de manière opérationnelle au dispositif de bord d'attaque, et configuré pour actionner le dispositif de bord d'attaque entre les positions rangée et déployé, et pour enlever une charge mécanique du panneau lorsque l'actionneur déplace le dispositif de bord d'attaque de la position rangée vers la position déployée.

3. Appareil selon la revendication 1, dans lequel le dispositif de bord d'attaque est une latte.

4. Procédé de réduction de traînée sur un aéronef, comprenant les étapes consistant à :
fournir une structure d'aile principale (500) ayant une surface supérieure (503), une surface inférieure (504), et un bord d'attaque fixe (501) ;
fournir une latte (510) ayant une surface extérieure de latte (514) en avant de la structure d'aile principale et une surface intérieure de latte (516) s'étendant entre la surface extérieure de latte et la structure d'aile principale, la latte étant mobile entre une position rangée, dans laquelle au moins une partie de la surface intérieure vient en prise avec la structure d'aile principale, et une position déployée, dans laquelle la surface intérieure est espacée de la structure d'aile principale ;
fournir un panneau (512) dans la surface supérieure de structure d'aile principale comprenant une surface extérieure de panneau et ayant un bord arrière (524), le panneau étant mobile entre une position rétractée et une position étendue ; et
placer le panneau dans la position rétractée lorsque la latte est dans la position rangée, de telle sorte que la surface extérieure de latte et une partie intermédiaire (526) de la surface supérieure de structure d'aile principale définissent une première forme extérieure continue, et déplacer le panneau vers la position étendue lorsque la latte est dans la position déployée, de telle sorte que la surface extérieure de panneau et la partie intermédiaire de la surface supérieure de structure d'aile principale définissent une seconde forme extérieure continue,
dans lequel le panneau comprend un bord avant (520) couplé de manière rotative à une partie avant de la surface supérieure de structure d'aile principale par une articulation (522), la partie avant étant disposée en avant de la partie intermédiaire,
**caractérisé par** l'utilisation d'un actionneur de panneau (532) couplé au panneau et configuré pour actionner le panneau entre les positions rétractée et étendue.
